(19) Europäisches Patentamt
European Patent Office
Office européen des brevets

(11) **EP 4 648 077 A1**

(12) **EUROPEAN PATENT APPLICATION**
published in accordance with Art. 153(4) EPC

(43) Date of publication:
**12.11.2025 Bulletin 2025/46**

(51) International Patent Classification (IPC):
*H01G 4/30* (2006.01)

(21) Application number: **24778812.8**

(52) Cooperative Patent Classification (CPC):
**H01G 4/30**

(22) Date of filing: **16.02.2024**

(86) International application number:
**PCT/JP2024/005490**

(87) International publication number:
**WO 2024/202667 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2023 JP 2023054074**

(71) Applicant: **Murata Manufacturing Co., Ltd.**
**Nagaokakyo-shi, Kyoto 617-8555 (JP)**

(72) Inventors:
• **KATSUBE, Shima**
**Nagaokakyo-shi, Kyoto 617-8555 (JP)**
• **ZENZAI, Kota**
**Nagaokakyo-shi, Kyoto 617-8555 (JP)**
• **MISHIMA, Yasuhiro**
**Nagaokakyo-shi, Kyoto 617-8555 (JP)**

(74) Representative: **Zimmermann, Tankred Klaus et al**
**Schoppe, Zimmermann, Stöckeler Zinkler, Schenk & Partner mbB Patentanwälte**
**Radlkoferstrasse 2**
**81373 München (DE)**

(54) **LAMINATED CERAMIC CAPACITOR**

(57)    Provided is a laminated ceramic capacitor having high mechanical strength. This laminated ceramic capacitor 1 comprises: a laminated body 2 including a plurality of dielectric layers 5 that are laminated; a first internal electrode layer 6a disposed above the plurality of dielectric layers 5 and exposed at a first end surface E1; a second internal electrode layer 6b disposed above the plurality of dielectric layers 5 and exposed at a second end surface E2; a first external electrode 20a disposed above the first end surface E1; and a second external electrode 20b disposed above the second end surface E2. The first external electrode 20a and the second external electrode 20b include: an underlying electrode layer 21 containing a metal component; a conductive resin layer 22 disposed above the underlying electrode layer 21 and containing a thermosetting resin 38 and a metal filler 30; and a plating layer disposed above the conductive resin layer 22. The metal filler 30 of the conductive resin layer 22 is a flat filler having a flat shape. A void 40 is provided on the surface of the flat filler.

FIG .5

EP 4 648 077 A1

## Description

TECHNICAL FIELD

The present invention relates to a multilayer ceramic capacitor.

BACKGROUND ART

In the prior art, an external electrode of a multilayer ceramic capacitor includes a base copper external electrode, a resin external electrode, a Ni plated layer, and a Sn plated layer. Patent Document 1 describes a resin external electrode having a three-layer configuration in the thickness direction. The first layer is a base copper-side layer, the second layer is an intermediate layer, and the third layer is a plating-side layer. Regarding the first layer and the second layer, Patent Document 1 discloses the void amounts thereof. The void amount of the first layer is 10% or less, and the void amount of the second layer is 16% or more. However, Patent Document 1 does not disclose the spatial distribution of voids in the resin electrode layer.

Citation List

Patent Document

Patent Document 1: Japanese Unexamined Patent Application, Publication No. 2020-88190

DISCLOSURE OF THE INVENTION

Problems to be Solved by the Invention

The multilayer ceramic capacitor of Patent Document 1 still has room for improvement. Since the electrically conductive resin layer has a three-layer configuration, the manufacturing cost increases. In addition, since the spatial distribution of voids in the electrically conductive resin layer is random, there is a variation in cohesive force within the electrically conductive resin layer. The variation in cohesive force within the electrically conductive resin layer causes a decrease in the mechanical strength of the multilayer ceramic capacitor.

It is an object for the present invention to provide multilayer ceramic electronic components, particularly multilayer ceramic capacitors with high mechanical strength. Means for Solving the Problems

A multilayer ceramic capacitor includes a multilayer body including a plurality of dielectric layers that are laminated, a first main surface and a second main surface opposed to each other in a height direction, a first lateral surface and a second lateral surface opposed to each other in a width direction orthogonal to the height direction, and a first end surface and a second end surface opposed to each other in a length direction orthogonal to the height direction and the width direction; first internal electrode layers, each provided on a corresponding one of the plurality of dielectric layers and each exposed at the first end surface; second internal electrode layers, each provided on a corresponding one of the plurality of dielectric layers and each exposed at the second end surface; a first external electrode provided on the first end surface; and

a second external electrode provided on the second end surface, in which the first external electrode and the second external electrode each include a base electrode layer including a metal component, an electrically conductive resin layer provided on the base electrode layer and including a thermosetting resin and a metal filler, and a plated layer provided on the electrically conductive resin layer, the metal filler in the electrically conductive resin layer is a flat-shaped filler having a flat shape, and a void is provided on a surface of the flat-shaped filler.

Effects of the Invention

According to the present invention, it is possible to provide multilayer ceramic capacitors with high mechanical strength.

BRIEF DESCRIPTION OF THE DRAWINGS

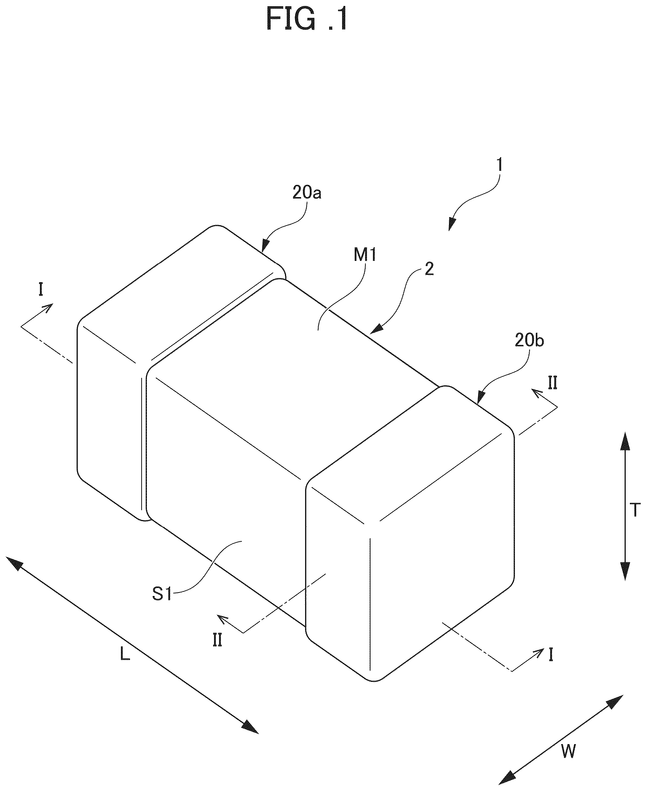

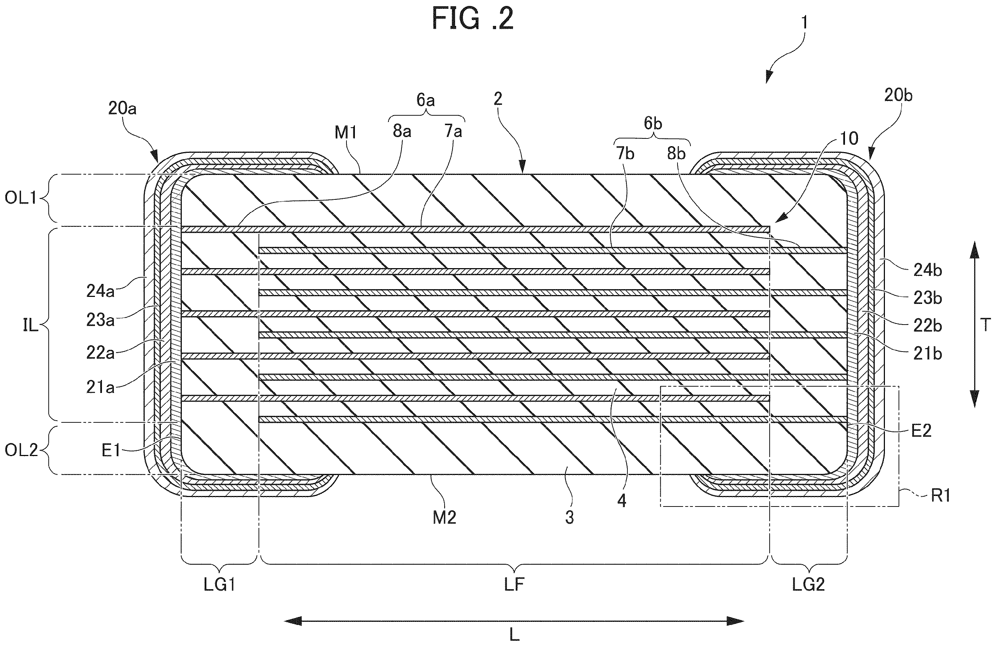

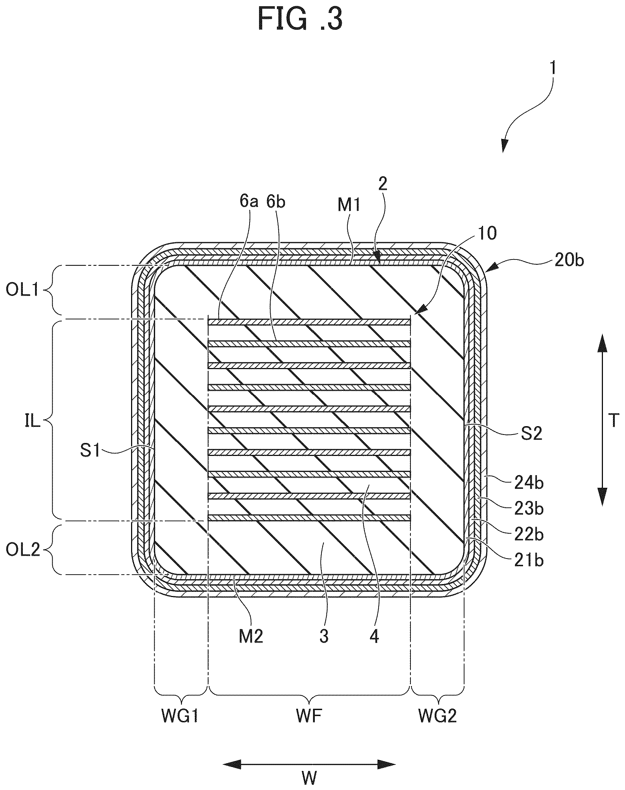

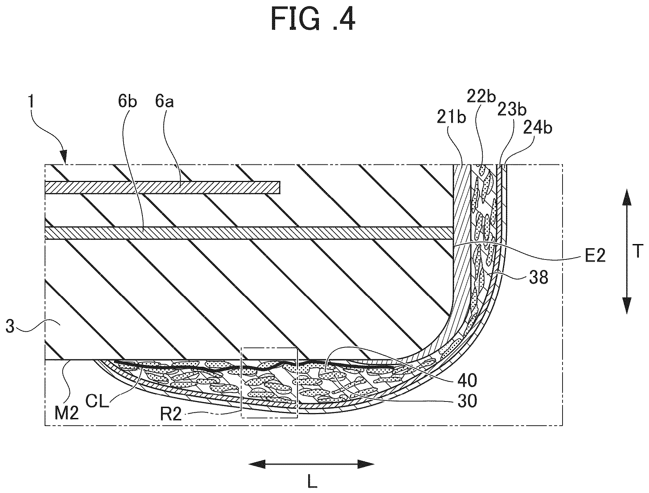

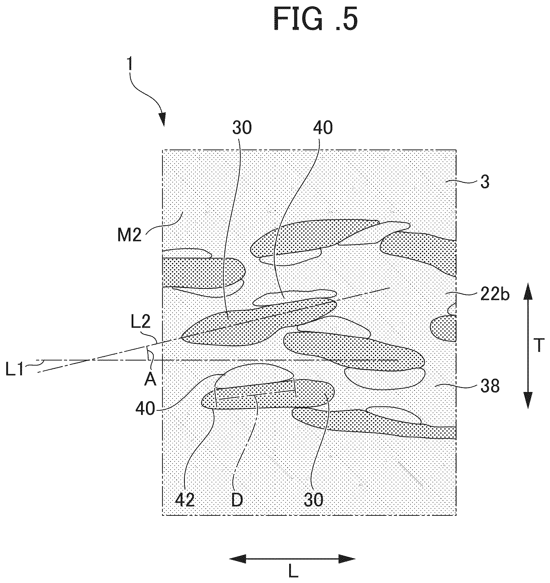

FIG. 1 is a perspective view of a multilayer ceramic capacitor according to one embodiment. FIG. 2 is a cross-sectional view taken along the line I-I in FIG. 1. FIG. 3 is a cross-sectional view taken along line the II-II in FIG. 1. FIG. 4 is an enlarged view of an area R1 enclosed by a frame in FIG. 2. FIG. 5 is an enlarged view of an area R2 enclosed by a frame in FIG. 4.

PREFERRED MODE FOR CARRYING OUT THE INVENTION

An embodiment of the present invention will be described based on FIG. 1. FIG. 1 is a perspective view of a multilayer ceramic capacitor 1 according to an embodiment of the present invention.

(Multilayer Body)

The multilayer body 2 includes a plurality of laminated dielectric layers and a plurality of internal electrode layers. The multilayer body 2 has approximately a rectangular parallelepiped shape. In the multilayer body 2, the direction in which the dielectric layers and the internal electrode layers are laminated is defined as the height direction T. The direction perpendicular to the height direction T is defined as the width direction W. The direction perpendicular to the height direction T and the width direction W is defined as the length direction L.

In the multilayer body 2, one of the two surfaces opposed to each other in the height direction T is defined as the first main surface M1. The other one is defined as the second main surface M2. In the multilayer body 2, one of the two surfaces opposed to each other in the width direction W is defined as the first lateral surface S1. The other one is defined as the second lateral surface. In the multilayer body 2, one of the two surfaces opposed to each other in the length direction L is defined as the first end surface E1. The other one is defined as the second end surface E2. The mounting surface of the multilayer ceramic capacitor 1 is the second main surface M2. The mounting surface refers to a surface that faces a wiring board or the like when the multilayer ceramic capacitor 1 is mounted on the wiring board or the like.

With respect to the cross section of the multilayer body 2, the cross section along the line I-I in FIG. 1 is defined as the LT cross section. With respect to the cross section of the multilayer body 2, the cross section along the line II-II in FIG. 1 is defined as the WT cross section.

A portion where three surfaces of the multilayer body 2 intersect is defined as a corner portion of the multilayer body 2, and a portion where two surfaces of the multilayer body 2 intersect is defined as a ridge portion of the multilayer body 2. It is preferable that the corner portions and the ridge portions are rounded.

(Dielectric Layer)

The total number of dielectric layers laminated in the multilayer body 2 is preferably 15 or more and 2000 or less. The main material of the dielectric layer is a ceramic material. Examples of the ceramic material include dielectric ceramics having barium titanate, calcium titanate, strontium titanate, calcium zirconate, or the like as a main component. The ceramic material may be a dielectric ceramic in which secondary components such as manganese compounds, iron compounds, chromium compounds, cobalt compounds, nickel compounds, and the like are added to these main components.

The thickness of one dielectric layer is preferably 0.5 $\mu$m or more and 10 $\mu$m or less.

(Division of Multilayer Body)

The division of the multilayer body 2 in the length direction L will be described based on FIG. 2. FIG. 2 is a cross-sectional view along the line I-I in FIG. 1. The multilayer body 2 can be divided into a first main surface-side outer layer portion OL1, an inner layer range IL, and a second main surface-side outer layer portion OL2 in the height direction T. The first main surface-side outer layer portion OL1, the inner layer range IL, and the second main surface-side outer layer portion OL2 are arranged in this order from the first main surface M1 toward the second main surface M2 in the height direction T.

The first main surface-side outer layer portion OL1 is a portion between an internal electrode layer closest to the first main surface M1 and the first main surface M1. The inner layer range IL is a range or an area where internal electrode layers are opposed to each other. The second main surface-side outer layer portion OL2 is a portion between an internal electrode layer closest to the second main surface M2 and the second main surface M2.

The first main surface-side outer layer portion OL1 is located adjacent to the first main surface M1 of the multilayer body 2. The first main surface-side outer layer portion OL1 includes an aggregate of a plurality of dielectric layers located between the first main surface M1 and the internal electrode layer closest to the first main surface M1. The first main surface-side outer layer portion OL1 includes a plurality of dielectric layers located between the first main surface M1, and the outermost surface of the inner layer range IL adjacent to the first main surface M1 and an extension line from the outermost surface.

The second main surface-side outer layer portion OL2 is located adjacent to the second main surface M2 of the multilayer body 2. The second main surface-side outer layer portion OL2 includes an aggregate of a plurality of dielectric layers located between the second main surface M2 and the internal electrode layer closest to the second main surface M2. The second main surface-side outer layer portion OL2 includes a plurality of dielectric layers located between the second main surface M2, and the outermost surface of the inner layer range IL adjacent to the second main surface M2 and an extension line from the outermost surface.

The inner layer range IL is an area sandwiched between the first main surface-side outer layer portion OL1 and the second main surface-side outer layer portion OL2.

Among the dielectric layers, dielectric layers located in the first main surface-side outer layer portion OL1 and the second main surface-side outer layer portion OL2 are defined as outer dielectric layers 3. Among the dielectric layers, dielectric layers located in the inner layer range IL are defined as inner dielectric layers 4.

The following terms may be used in the description of dimensions and positions.

The length in the length direction L is defined as the length direction dimension. The length in the width direction W is defined as the width direction dimension. The length in the height direction T is defined as the height direction dimension.

The position at half the length direction dimension is defined as the middle position in the length direction L. The middle position in the length direction L is defined as the length direction-middle position.

The position at half the width direction dimension is defined as the middle position in the width direction W. The middle position in the width direction W is defined as the width direction-middle position.

The position at half the height direction dimension is defined as the middle position in the height direction T. The middle position in the height direction T is defined as the height direction-middle position.

The ends in the length direction L are defined as the length direction ends. The ends in the width direction W are defined as the width direction ends. The ends in the height direction T are defined as the height direction ends.

The size of the multilayer body 2 is not particularly limited. The length direction dimension of the multilayer body is preferably 0.2 mm or more and 10 mm or less. The width direction dimension of the multilayer body 2 is preferably 0.1 mm or more and 5 mm or less. The height direction dimension of the multilayer body 2 is preferably 0.1 mm or more and 5 mm or less.

(L gap)

The division of the multilayer body 2 in the length direction L will be explained. The multilayer body 2 can be divided in the length direction L into a first end surface-side outer layer portion LG1, a length direction counter portion LF, and a second end surface-side outer layer portion LG2. The first end surface-side outer layer portion LG1, the length direction counter portion LF, and the second end surface-side outer layer portion LG2 are arranged in this order from the first end surface E1 toward the second end surface E2 in the length direction L.

The length direction counter portion LF refers to a portion where the internal electrode layers are opposed to each other in the height direction T. The first end surface-side outer layer portion LG1 refers to a portion between the length direction counter portion LF and the first end surface E1. The second end surface-side outer layer portion LG2 refers to a portion between the length direction counter portion LF and the second end surface E2. The length direction counter portion LF corresponds to the counter electrode portion of the internal electrode layers. The first end surface-side outer layer portion LG1 and the second end surface-side outer layer portion LG2 correspond to extension electrode portions of the internal electrode layers. The first end surface-side outer layer portion LG1 and the second end surface-side outer layer portion LG2 are also referred to as L gaps.

The counter electrode portion includes first counter electrode portions 7a and second counter electrode portions 7b. The extension electrode portion includes first extension electrode portions 8a and second extension electrode portions 8b. The counter electrode portion and the extension electrode portions will be described later.

The first end surface-side outer layer portion LG1 is located adjacent to the first end surface E1. The first end surface-side outer layer portion LG1 is located between the first end surface E1 and the end of each of the second internal electrode layers 6b adjacent to the first end surface E1.

The second end surface-side outer layer portion LG2 is located adjacent to the second end surface E2. The second end surface-side outer layer portion LG2 is located between the second end surface E2 and the end of each of the first internal electrode layers 6a adjacent to the second end surface E2.

(W gap)

The division of the multilayer body 2 in the width direction W will be described with reference to FIG. 3. FIG. 3 is a cross-sectional view taken along the line II-II in FIG. 1. The multilayer body 2 can be divided in the width direction W into a first lateral surface-side outer layer portion WG1, a width direction counter portion WF, and a second lateral surface-side outer layer portion WG2. The first lateral surface-side outer layer portion WG1, the width direction counter portion WF, and the second lateral surface-side outer layer portion WG2 are arranged in this order from the first lateral surface S1 toward the second lateral surface S2 in the width direction W.

The width direction counter portion WF refers to a portion where the internal electrode layers are opposed to each other in the height direction T. The first lateral surface-side outer layer portion WG1 refers to a portion between the width direction counter portion WF and the first lateral surface S1. The second lateral surface-side outer layer portion WG2 refers to a portion between the width direction counter portion WF and the second lateral surface S2. The first lateral surface-side outer layer portion WG1 and the second lateral surface-side outer layer portion WG2 are also referred to as W gaps.

The first lateral surface-side outer layer portion WG1 and the second lateral surface-side outer layer portion WG2 are portions where no internal electrode layers exist in the height direction T. The first lateral surface-side outer layer portion WG1 is located adjacent to the first lateral surface S1. The first lateral surface-side outer layer portion WG1 includes a plurality of dielectric layers located between the first lateral surface S1 and the outermost surface of the width direction counter portion WF adjacent to the first lateral surface S1.

The second lateral surface-side outer layer portion WG2 is located adjacent to the second lateral surface S2. The second lateral surface-side outer layer portion WG2 includes a plurality of dielectric layers located between the second lateral surface S2 and the outermost surface of the width direction counter portion WF adjacent to the second lateral surface S2.

(Internal electrode layers)

The internal electrode layers include a plurality of first internal electrode layers 6a and a plurality of second internal electrode layers 6b. The first internal electrode layers 6a refer to internal electrode layers, each exposed at the first end surface E1. The second internal electrode layers 6b refer to internal electrode layers, each exposed at the second end surface E2.

Each of the first internal electrode layers 6a can be divided into the first counter electrode portion 7a and the first extension electrode portion 8a. The first counter electrode portion 7a refers to a portion opposed to a corresponding one of the second internal electrode layers 6b. The first extension electrode portion 8a refers to a portion extending from the first counter electrode portion 7a toward the first end surface E1 of the multilayer body 2.

The first extension electrode portion 8a includes an end adjacent to the first end surface E1, the end extending toward the surface of the first end surface E1 of the multilayer body 2. The end of the first extension electrode portion 8a extending toward the first end surface E1 provides an exposed portion at the first end surface E1.

Each of the second internal electrode layers 6b can be divided into the second counter electrode portion 7b and the second extension electrode portion 8b. The second counter electrode portion 7b refers to a portion that is opposed to a corresponding one of the first internal electrode layers 6a. The second extension electrode portion 8b is a portion that extends from the second counter electrode portion 7b toward the second end surface E2 of the multilayer body 2.

The second extension electrode portion 8b includes an end adjacent to the second end surface E2, the end extending toward the surface of the second end surface E2 of the multilayer body 2. The end of the second extension electrode portion 8b extending toward the second end surface E2 provides an exposed portion at the second end surface E2.

The shape of the first counter electrode portion 7a and the shape of the second counter electrode portion 7b are not particularly limited. The shape of the first counter electrode portion 7a and the shape of the second counter electrode portion 7b are preferably rectangular. The corner portions of the first counter electrode portion 7a and the corner portions of the second counter electrode portion 7b may be rounded. The corner portions of the first counter electrode portion 7a and the corner portions of the second counter electrode portion 7b may be provided obliquely. Being provided obliquely indicates being provided in a tapered shape.

The shape of the first extension electrode portion 8a and the shape of the second extension electrode portion 8b are not particularly limited. The shape of the first extension electrode portion 8a and the shape of the second extension electrode portion 8b are preferably rectangular. The corner portions of the first extension electrode portion 8a and the corner portions of the second extension electrode portion 8b may be rounded. The corner portions of the first extension electrode portion 8a and the corner portions of the second extension electrode portion 8b may be provided obliquely. Being provided obliquely indicates being provided in a tapered shape.

The width of the first counter electrode portion 7a and the width of the first extension electrode portion 8a may be the same. One of the width of the first counter electrode portion 7a or the width of the first extension electrode portion 8a may be narrower than the other.

The width of the second counter electrode portion 7b and the width of the second extension electrode portion 8b may be the same. One of the width of the second counter electrode portion 7b or the width of the second extension electrode portion 8b may be narrower than the other.

The material of the first internal electrode layer 6a and the second internal electrode layer 6b may be, for example, metals such as nickel, copper, silver, palladium, and gold. The material of the first internal electrode layer 6a and the second internal electrode layer 6b may be alloys including at least one of the aforementioned metals, such as silver-palladium alloy.

In the multilayer ceramic capacitor 1, capacitance is generated by the first counter electrode portion 7a and the second counter electrode portion 7b opposing each other with a corresponding one of the inner dielectric layers 4 interposed therebetween. This enables the multilayer ceramic capacitor 1 to develop capacitor characteristics.

The thickness of the first internal electrode layer 6a and the thickness of the second internal electrode layer 6b are preferably about 0.2 $\mu$m or more and 2.0 $\mu$m or less, for example. The total number obtained by adding the number of the first internal electrode layers 6a and the number of the second internal electrode layers 6b is preferably 15 or more and 2000 or less.

(Inner Layer Portion)

The portion where the first internal electrode layers 6a and the second internal electrode layers 6b are opposed to each other is defined as the inner layer portion 10. The inner layer portion 10 is the portion where the length direction counter portion LF shown in FIG. 2 and the width direction counter portion WF shown in FIG. 3 intersect with the inner layer range IL. The shape of the inner layer portion 10 is approximately a rectangular parallelepiped. In FIG. 2, the portion where the length direction counter portion LF and the inner layer range IL intersect is shown as the inner layer portion 10. Also, in FIG. 3, the portion where the width direction counter portion WF and the inner layer range IL intersect is shown as the inner layer portion 10.

(External Electrodes)

The external electrodes will be described. The external electrodes include the first external electrode 20a and the second external electrode 20b. The first external electrode 20a is an external electrode connected to the first internal electrode layers 6a. The first external electrode 20a is provided on the first end surface E1, a portion of the first main surface M1, a portion of the second main surface M2, a portion of the first lateral surface S1, and a portion of the second lateral surface S2.

The second external electrode 20b is an external electrode connected to the second internal electrode layers 6b. The second external electrode 20b is provided on the second end surface E2, a portion of the first main surface M1, a portion of the second main surface M2, a portion of the first lateral surface S1, and a portion of the second lateral surface S2.

The external electrodes each preferably include a base electrode layer, an electrically conductive resin layer, and a plated layer. The plated layer preferably includes a Ni plated layer and an Sn plated layer. The external electrodes each including the base electrode layer, the electrically conductive resin layer, the Ni plated layer, and the Sn plated layer will be described below.

(Base Electrode Layer)

The base electrode layer includes a first base electrode layer 21a and a second base electrode layer 21b. The first base electrode layer 21a is provided on the first end surface E1, a portion of the first main surface M1, a portion of the second main surface M2, a portion of the first lateral surface S1, and a portion of the second lateral surface S2. The second base electrode layer 21b is provided on the second end surface E2, a portion of the first main surface M1, a portion of the second main surface M2, a portion of the first lateral surface S1, and a portion of the second lateral surface S2.

The base electrode layer includes an electrically conductive metal and a glass component. The electrically conductive metal is at least one of copper, nickel, silver, palladium, silver-palladium alloy, gold, and the like. The glass component is at least one of boron, silicon, barium, manganese, aluminum, lithium, and the like.

The base electrode layer may include a plurality of layers. The base electrode layer can be formed by applying an electrically conductive paste containing a glass component and a metal to the multilayer body, and then firing the resulting product. The firing of the base electrode layer can be performed simultaneously with the firing of the internal electrode layers. Alternatively, the firing of the base electrode layer can be performed separately after firing the internal electrode layers.

When firing the base electrode layer simultaneously with the internal electrode layers, it is preferable to add a dielectric material instead of a glass component to the electrically conductive paste. This makes it possible to improve the adhesion between the base electrode layer and the multilayer body 2.

The thickness of the base electrode layer at the height direction-middle position on the first end surface E1 or the second end surface E2 is preferably 10 $\mu$m or more and 150 $\mu$m or less.

When the base electrode layer is provided on the first main surface M1, the second main surface M2, the first lateral surface S1, and the second lateral surface S2, the thickness of the base electrode layer at the length direction-middle position on the first main surface M1, the second main surface M2, the first lateral surface S1, and the second lateral surface S2 is preferably 5 $\mu$m or more and 50 $\mu$m or less.

In addition, the base electrode layer may be a thin film layer. When the base electrode layer is a thin film layer, the thin film layer can be formed by a thin film formation method such as sputtering or vapor deposition. The formed thin film layer is a layer in which metal particles are deposited. The thickness of the thin film layer is preferably 1 $\mu$m or less.

(Electrically Conductive Resin Layer)

An electrically conductive resin layer is provided on the base electrode layer. The electrically conductive resin layer includes a resin component and a metal component. The electrically conductive resin layer includes a first electrically conductive resin layer 22a and a second electrically conductive resin layer 22b.

The first electrically conductive resin layer 22a is provided on the first base electrode layer 21a. The first electrically conductive resin layer 22a covers the first base electrode layer 21a. The second electrically conductive resin layer 22b is provided on the second base electrode layer 21b. The second electrically conductive resin layer 22b covers the second base electrode layer 21b. The end of the electrically conductive resin layer is preferably in contact with the multilayer body 2.

The electrically conductive resin layer includes a thermosetting resin. By including the thermosetting resin, the electrically conductive resin layer is more flexible than the base electrode layer.

The electrically conductive resin layer functions as a buffer layer. Therefore, when a bending stress is applied to the mounting substrate and a physical impact is applied to the multilayer ceramic capacitor 1 due to this stress, cracks are less likely to occur in the multilayer ceramic capacitor 1. When shock due to thermal cycling is applied to the multilayer ceramic capacitor 1, cracks are less likely to occur in the multilayer ceramic capacitor 1.

The thermosetting resin included in the electrically conductive resin layer can be a thermosetting resin such as an epoxy resin, phenol resin, urethane resin, silicone resin, polyimide resin, or the like. Among these resins, epoxy resin is one of the most suitable resins. Epoxy resins have excellent heat resistance, moisture resistance, adhesion, and the like. In addition, a plurality of types of resins such as epoxy resins and phenol resins may be used.

The electrically conductive resin layer preferably includes a curing agent in addition to the thermosetting resin. When epoxy resin is used as the heat-curable resin, the curing agent can be compounds such as phenol-based, amine-based, acid anhydride-based, imidazole-based, active ester-based and amidoimide-based compounds.

As described above, the electrically conductive resin layer includes a metal component. By including the metal component in the electrically conductive resin layer, the electrically conductive resin layer is electrically conductive. The metal component included in the electrically conductive resin layer is included in the electrically conductive resin layer as a metal powder, that is, a metal filler. Contact between metal fillers forms an electrically conductive path inside the electrically conductive resin layer. The formed electrically conductive path allows the electrically conductive resin layer to be electrically conductive. The metal component will be described later.

The thickness of the electrically conductive resin layer 22 at the height direction-middle position located on the first end surface E1 or the second end surface E2 is preferably 10 μm or more and 200 μm or less.

When the electrically conductive resin layer is provided on the first main surface M1, the second main surface M2, the first lateral surface S1, and the second lateral surface S2, the thickness of the electrically conductive resin layer at the length direction-middle position on the first main surface M1, the second main surface M2, the first lateral surface S1, and the second lateral surface S2 is preferably 10 μm or more and 200 μm or less.

(Plated Layer)

The plated layer will be described. The plated layer includes a Ni plated layer and a Sn plated layer.

(Ni Plated Layer)

The Ni plated layer is provided on the electrically conductive resin layer. The Ni plated layer covers at least a portion of the electrically conductive resin layer. The Ni plated layer includes a first Ni plated layer 23a and a second Ni plated layer 23b. The first Ni plated layer 23a is provided on the first electrically conductive resin layer 22a. The second Ni plated layer 23b is provided on the second electrically conductive resin layer 22b.

The Ni plated layer reduces or prevents erosion of the base electrode layer or the like by solder when mounting the multilayer ceramic capacitor 1.

(Sn Plated Layer)

The Sn plated layer is provided on the Ni plated layer. The Sn plated layer covers at least a portion of the Ni plated layer. The Sn plated layer includes a first Sn plated layer 24a and a second Sn plated layer 24b. The first Sn plated layer 24a is provided on the first Ni plated layer 23a. The second Sn plated layer 24b is provided on the second Ni plated layer 23b.

The Sn plated layer has good solder wettability. The Sn plated layer facilitates mounting of the multilayer ceramic capacitor 1 on a substrate or the like.

The thickness per layer of the Ni plated layer and the Sn plated layer is preferably 2 μm or more and 15 μm or less.

The size of the multilayer ceramic capacitor 1 is not limited thereto. The preferred length direction dimension of the multilayer ceramic capacitor 1 including the multilayer body 2 and the external electrodes is 0.2 mm or more and 10 mm or less. The preferred height direction dimension of the multilayer ceramic capacitor 1 including the multilayer body 2 and the external electrodes is 0.1 mm or more and 5 mm or less. The preferred width direction dimension of the multilayer ceramic capacitor 1 including the multilayer body 2 and the external electrodes is 0.1 mm or more and 10 mm or less.

(Metal Component)

The metal component included in the electrically conductive resin layer will be described. The electrically conductive resin layer includes a metal component in order to provide electrical conductivity to the electrically conductive resin layer.

The metal component included in the electrically conductive resin layer can be silver, copper, nickel, tin, bismuth, or an alloy containing these metals. The metal component preferably includes silver in particular. The silver may be silver alone. Alternatively, the silver may be an alloy containing silver. For example, the metal component can be at least one of silver, silver-coated copper, and silver-coated alloy powder.

The metal component is included in the electrically conductive resin layer as a metal filler as described above. FIG. 4 is an enlarged view of the region R1 enclosed by a frame in FIG. 2. FIG. 5 is an enlarged view of the region R2 enclosed by a frame in FIG. 4. The following description will be provided using the second electrically conductive resin layer 22b as an example of the electrically conductive resin layer. However, the following description also applies to the first electrically conductive resin layer 22a.

As shown in FIG. 4, metal fillers 30 are provided in the second electrically conductive resin layer 22b. The metal fillers 30 are arranged in a plurality to be dispersed within a resin 38.

The shape of the metal fillers 30 included in the electrically conductive resin layer is flat. Hereinafter, the flat-shaped metal fillers 30 may be referred to as flat fillers 30.

Also, voids 40 are provided on the surface of the metal fillers 30.

In the multilayer ceramic capacitor 1 according to the present embodiment, it is possible to improve the mechanical strength of the multilayer ceramic capacitor 1. When destruction within the electrically conductive resin layer occurs at the interface between the flat fillers 30 and the resin 38, the voids 40 that are present uniformly between the flat fillers 30 and the resin 38 reduces the breaking strength of the entire resin electrode. As a result, when thermal stress or mechanical stress is applied to the multilayer ceramic capacitor 1, the resin electrode layer is preferentially destroyed rather than the dielectric layers of the multilayer body 2, thereby making it possible to avoid destruction of the dielectric layers. Consequently, it is possible to enhance the mechanical strength of the multilayer ceramic capacitor 1. These aspects will be explained in order below.

In the multilayer ceramic capacitor 1 according to the present embodiment, the electrically conductive resin layer includes flat fillers as the metal fillers 30. The flat fillers refer to metal fillers 30, each having the following shape.

The flatness ratio is defined as follows. The metal fillers 30 each having a flatness ratio of 4 or more are defined as the flat fillers 30.

$$Flatness\ ratio = a/b$$

Direction A: The direction in which each of the metal fillers 30 has the longest length. The longitudinal direction of each of the metal fillers 30. Midpoint M: The midpoint of each of the metal fillers 30 in direction A. Length a: The longest length of each of the metal fillers 30 in the same direction as direction A at midpoint M. Length b: The shortest length of each of the metal fillers 30 in a direction perpendicular to direction A at midpoint M.

As shown in FIGS. 4 and 5, voids 40 are provided on the surface of the flat fillers 30. In other words, voids 40 are arranged around the flat fillers 30. Also, each of the flat fillers 30 is oriented in a direction closer to a horizontal direction than a vertical direction with respect to the plane of the base body. The base body refers to the multilayer body 2. The plane referred to here indicates the second main surface M2 or the second end surface E2. Being oriented indicates that direction A of each of the flat fillers 30 is oriented in a predetermined direction. In the second electrically conductive resin layer 22b on the second main surface M2, each of the flat fillers 30 is oriented to extend in a direction substantially parallel to the length direction L of the multilayer body 2.

The line CL shown in FIG. 4 indicates the direction of crack propagation when external stress is applied to the multilayer ceramic capacitor 1.

As shown in FIG. 4, each of the flat fillers 30 extends in a direction substantially parallel to the length direction L. Also, as shown in FIG. 5, each of the voids 40 provided on the surface of a corresponding one of the flat fillers 30 is arranged along at least a portion of the outer periphery 42 of the flat filler 30. More specifically, each of the voids 40 is arranged on a portion of the outer periphery 42 of a corresponding one of the flat fillers 30 that is substantially parallel to the length direction L.

By arranging the voids 40 around the flat-shaped fillers 30 as described above, it is possible to control the propagation of cracks in the electrically conductive resin layer when external stress is applied to the multilayer ceramic capacitor 1. Controlling the propagation of cracks indicates regulating the degree of crack propagation. The degree of crack propagation is regulated so that external stress is reduced by the cracks, making it less likely for external stress to affect the dielectric layers. As a result, it is possible to reduce or prevent the propagation of cracks that occur in the resin electrode layer into the dielectric layers.

It is preferable that each of the voids 40 arranged around the periphery 42 of each of the flat-shaped fillers 30 is provided in a range of 5% or more and 90% or less of the perimeter length of the periphery 42 of each of the flat-shaped fillers 30 observed in the LT cross section.

This will be explained based on the drawings. In FIG. 5, the range in which each of the voids 40 is arranged on the periphery 42 of each of the flat-shaped fillers 30 is shown as a range D. It is preferable that the length of the periphery 42 of each of the flat-shaped fillers 30 included in the range D is 5% or more and 90% or less of the total perimeter length of the periphery 42 of the flat-shaped filler 30.

By arranging the voids 40 as described above, it is possible to further reduce or prevent the propagation of cracks that occur in the resin electrode layer into the dielectric layers.

Also, a plurality of flat-shaped fillers 30 are arranged in the resin electrode layer, and it is preferable that, within a predetermined range in the LT cross section, the proportion of metal fillers 30 each having a corresponding one of the voids 40 arranged thereon in a range of 5% or more and 90% or less of the perimeter length of the periphery 42 of each of the flat-shaped fillers 30 is 60% or more of the total number of flat-shaped fillers 30. Here, the predetermined range is, for example, a rectangular area of 20 $\mu$m $\times$ 10 $\mu$m.

Furthermore, it is preferable that, within a predetermined area in the LT cross section, the proportion of metal fillers 30 each having a slope angle of 45° or less with respect to the direction parallel to the length direction L of the multilayer body 2 is 50% or more of the total number of flat-shaped fillers 30. The predetermined area is, as mentioned above, for example, a rectangular area of 20 $\mu$m $\times$ 10 $\mu$m.

This will be explained based on the drawings. In FIG. 5, the slope angle of each of the flat-shaped fillers 30 with respect to the direction parallel to the length direction L of the multilayer body 2 is shown as angle A. Angle A is the angle forming by line L1 and line L2. Line L1 is a line indicating the direction parallel to the length direction L. Line L2 indicates the longitudinal direction of each of the flat-shaped fillers 30.

It is preferable that the proportion of flat-shaped fillers 30 having angle A of 45° or less is 50% or more.

By arranging the voids 40 as described above, it is possible to further reduce or prevent the propagation of cracks that occur in the resin electrode layer into the dielectric layers.

In the multilayer ceramic capacitor 1 of the present embodiment, as described above, by arranging the voids 40 on the surfaces of the flat-shaped fillers 30, it is possible to uniformly arrange the voids 40 between the metal fillers 30 and the resin. As a result, the fracture strength of the overall resin electrode is reduced, and when thermal stress or mechanical stress is applied to the multilayer ceramic capacitor 1, the resin electrode layer is preferentially broken rather than the dielectric layers. Consequently, it is possible to avoid breakage of the dielectric layers and improve the mechanical strength of the multilayer ceramic capacitor 1.

The average particle size of the metal fillers 30 is not particularly limited thereto. The average particle size of the metal fillers 30 can be, for example, 0.3 $\mu$m or more and 10 $\mu$m or less. The average particle size of the metal fillers included in the electrically conductive resin layer can be determined by calculation based on the laser diffraction particle size measurement method (based on IOS 13320).

It is preferable that the amount of resin included in the electrically conductive resin layer is 25 vmol% or more and 65 vmol% or less with respect to the total volume of the electrically conductive resin layer.

It is preferable that the amount of metal component included in the electrically conductive resin layer is 35 vmol% or more and 75 vmol% or less with respect to the total volume of the electrically conductive resin layer.

(Evaluation of Characteristics)

Mechanical strength and other properties were evaluated as follows. The conditions of the multilayer ceramic capacitors used for the evaluation are as follows. The size of the multilayer ceramic capacitor is 1.0 mm in length direction, 0.5 mm in width direction, and 0.5 mm in height direction. The capacitance of the multilayer ceramic capacitor is 0.010 $\mu$F. The rated voltage of the multilayer ceramic capacitor is 50 V.

The evaluation method and judgment criteria for mechanical strength are as follows. Mechanical strength was evaluated based on the difficulty of crack occurrence. For mechanical strength, a bending test was conducted on 10 completed multilayer ceramic capacitors according to the method of JIS C 6484, and the presence or absence of cracks in the dielectric layers was evaluated when the deflection amount was fixed at 5 mm. In the multilayer ceramic capacitor 1 of the present embodiment, no cracks occur.

(Measurement Method and Observation Method)

The LT cross section shown in FIG. 4 can be observed, for example, as follows. The multilayer ceramic capacitor 1 is polished to the width direction-middle position. Then, the exposed cross section by polishing is observed using an optical microscope or the like. The length and thickness of each portion can be measured from the observed cross section.

For the observation of the voids 40, the external electrode of the multilayer ceramic capacitor 1 was cross-sectionally processed by ion milling, and the state of the voids was observed with a backscattered electron image of FE-SEM (Field Emission Scanning Electron Microscope).

(Manufacturing Method of Multilayer Ceramic Capacitor)

A manufacturing method of the multilayer ceramic capacitor 1 will be described.

(1) Prepare a dielectric sheet and an electrically conductive paste for internal electrode layers. The dielectric sheet and the electrically conductive paste for manufacturing internal electrode layers include a binder and a solvent. The binder and the solvent may be known organic binders and organic solvents.

(2) Print the electrically conductive paste for manufacturing internal electrode layers on the dielectric sheet in a predetermined pattern. The internal electrode layer pattern is formed by printing the electrically conductive paste. The printing can be performed by, for example, screen printing or gravure printing.

(3) Laminate a predetermined number of dielectric sheets for manufacturing the outer layer portion. No internal electrode layer pattern is printed on the dielectric sheets for manufacturing the outer layer portion. Dielectric sheets with printed internal electrode layer patterns are sequentially laminated on the laminated dielectric sheets. Furthermore, a predetermined number of dielectric sheets for manufacturing the outer layer portion are laminated thereon. A multilayer sheet is produced by these lamination processes.

(4) Manufacture a multilayer block by pressing the multilayer sheet in the height direction. A hydrostatic press can be used for the pressing method.

(5) Cut the multilayer block to a predetermined size. Multilayer chips are cut out by this cutting. The corner portions and ridge portions of each of the multilayer chips may be rounded. Barrel polishing can be used for the method for rounding.

(6) Fire the multilayer chips. Multilayer bodies are manufactured by this firing. The preferable firing temperature is 900°C or higher and 1200°C or lower. The firing temperature can be changed according to the materials of the dielectric and the internal electrode layer.

External electrodes are provided on each of the multilayer bodies.

(7) Apply electrically conductive paste for manufacturing a base electrode to both end surfaces of the multilayer body. The electrically conductive paste includes a glass component and metal. A dipping method can be used for the application, for example. After the application, firing treatment is performed. The base electrode layer is formed by this firing treatment. The preferable temperature for the firing treatment is 700°C or higher and 900°C or lower. The base electrode layer is a fired layer.

(8) Form the electrically conductive resin layer on the base electrode layer. An electrically conductive resin paste is prepared. The electrically conductive resin paste includes a resin component, a metal component, and a solvent. A thermosetting resin is used as the resin component. Specifically, at least one of an epoxy resin and a phenol resin is used as the resin component.

In the present embodiment, as a solvent for the electrically conductive resin paste, a solvent in which a high-boiling-point solvent having a boiling point of 250°C or higher shown below is added to diethylene glycol monobutyl ether (molecular weight is 162.23, and boiling point is 230°C) is used.

- Dibutyl sebacate (molecular weight is 314.47, and boiling point is 345°C)
- Diethyl sebacate (molecular weight is 258.36, and boiling point is 309°C)
- Dibutyl adipate (molecular weight is 258.36, and boiling point is 305°C)
- Dimethyl sebacate (molecular weight is 230.30, and boiling point is 294°C)
- Diethyl suberate (molecular weight is 230.30, and boiling point is 283°C)
- Dibutyl succinate (molecular weight is 230.30, and boiling point is 274°C)
- Diethyl adipate (molecular weight is 202.25, and boiling point is 251°C)

Only one type of high-boiling-point solvent may be added, or multiple types thereof may be added. In the present embodiment, for example, dibutyl adipate (molecular weight is 258.36, and boiling point is 305°C) is used.

Metal powder, that is, metal filler, is added as the metal component. At least one of silver, silver-coated copper, and silver-coated alloy powder is used as the metal filler. The metal fillers each have a flat shape. Metal fillers each having a spherical shape may also be added.

The electrically conductive resin paste is applied on the base electrode layer. A dipping method can be used for the application.

After the application, heat treatment is performed. As the heat treatment, the paste is dried for 10 minutes at 150°C or higher and 180°C or lower in a hot air oven. After that, it is cured for 60 minutes at 200°C or higher and 280°C or lower in an air atmosphere. The electrically conductive electrode layer is formed by this heat curing.

By forming the electrically conductive electrode layer in this manner, it is possible to locate voids on the surface of each of the metal fillers. In addition, the proportion of the portion where the voids are located relative to the outer circumference of the respective metal fillers can be adjusted by changing the type of high-boiling-point solvent, the amount of high-boiling-point solvent added, drying conditions, or curing conditions.

The atmosphere during heat treatment is preferably a nitrogen gas atmosphere. The preferable oxygen concentration is 100 ppm or less. This oxygen concentration makes it difficult for the resin to scatter. In addition, this oxygen concentration makes it difficult for various metal components to oxidize.

(9) After forming the electrically conductive resin layer, form a Ni plated layer on the surface of the resin layer. This Ni plated layer functions as the first Ni plated layer and the second Ni plated layer. An electrolytic plating method can be used for the method for forming the Ni plated layer. The preferable plating method is barrel plating.

(10) Form a Sn plated layer on the Ni plated layer. The first Sn plated layer is formed on the first Ni plated layer. The second Sn plated layer is formed on the second Ni plated layer. By forming the Sn plated layer, it is possible to improve the wettability of the solder used for mounting when the multilayer ceramic capacitor 1 is mounted on a substrate or the like. This facilitates mounting the multilayer ceramic capacitor 1 on a substrate or the like. An electrolytic plating method can be used for the method for forming the Sn plated layer. The preferable plating method is barrel plating.

Although embodiments of the present invention have been described above, the present invention is not limited thereto, and various changes and modifications are possible.

<1> A multilayer ceramic capacitor includes a multilayer body including a plurality of dielectric layers that are laminated, a first main surface and a second main surface opposed to each other in a height direction, a first lateral surface and a second lateral surface opposed to each other in a width direction orthogonal to the height direction, and a first end surface and a second end surface opposed to each other in a length direction orthogonal to the height direction and the width direction; first internal electrode layers, each provided on a corresponding one of the plurality of dielectric layers and each exposed at the first end surface; second internal electrode layers, each provided on a corresponding one of the plurality of dielectric layers and each exposed at the second end surface; a first external electrode provided on the first end surface; and
a second external electrode provided on the second end surface, in which the first external electrode and the second external electrode each include a base electrode layer including a metal component, an electrically conductive resin layer provided on the base electrode layer and including a thermosetting resin and a metal filler, and a plated layer provided on the electrically conductive resin layer, the metal filler in the electrically conductive resin layer is a flat-shaped filler having a flat shape, and a void is provided in a surface of the flat-shaped filler.

<2> In the multilayer ceramic capacitor as described in <1> above, the void provided in the surface of the flat-shaped filler is provided along at least a portion of an outer periphery of the flat-shaped filler.

<3> In the multilayer ceramic capacitor as described in <1> or <2> above, in a cross section parallel to the height direction and the length direction of the multilayer body, the void is provided in a range of 5% or more and 90% or less of a perimeter length of the outer periphery of the flat-shaped filler.

<4> In the multilayer ceramic capacitor as described in any one of <1> to <3>, the flat-shaped filler extends in a direction substantially parallel to the length direction.

<5> In the multilayer ceramic capacitor as described in any one of <1> to <4> above, the flat-shaped filler comprises a plurality of flat-shaped fillers which are provided in the electrically conductive resin layer, and when observed in a predetermined cross section of the electrically conductive resin layer, a ratio of the flat-shaped fillers, each having the void provided in a range of 5% or more and 90% or less of a perimeter length of the outer periphery of a corresponding one of the plurality of flat-shaped fillers relative to a total number of the plurality of flat-shaped fillers is 60% or more.

## EXPLANATION OF REFERENCE NUMERALS

1     multilayer ceramic capacitor
2     multilayer body
3     outer dielectric layer
4     inner dielectric layer
5a     first dielectric layer
5b     second dielectric layer
6a     first internal electrode layer
6b     second internal electrode layer
10     inner layer portion
20a     first external electrode
20b     second external electrode
21a     first base electrode layer
21b     second base electrode layer
22a     first electrically conductive resin layer
22b     second electrically conductive resin layer
23a     first Ni plated layer
23b     second Ni plated layer
24a     first Sn plated layer
24b     second Sn plated layer
30     metal filler (flat-shaped filler)
38     resin
40     void
42     outer periphery of metal filler

## Claims

1. A multilayer ceramic capacitor comprising:

   a multilayer body including a plurality of dielectric layers that are laminated, a first main surface and a second main surface opposed to each other in a height direction, a first lateral surface and a second lateral surface opposed to each other in a width direction orthogonal to the height direction, and a first end surface and a second end surface opposed to each other in a length direction orthogonal to the height direction and the width direction;
   first internal electrode layers, each provided on a corresponding one of the plurality of dielectric layers and each exposed at the first end surface;
   second internal electrode layers each provided on a corresponding one of the plurality of dielectric layers and each exposed at the second end surface;
   a first external electrode provided on the first end surface; and
   a second external electrode provided on the second end surface,
   wherein
   the first external electrode and the second external electrode each include a base electrode layer including a metal component, an electrically conductive resin layer provided on the base electrode layer and including a thermosetting resin and a metal filler, and a plated layer provided on the electrically conductive resin layer,
   wherein the metal filler in the electrically conductive resin layer is a flat-shaped filler having a flat shape, and
   wherein a void is provided in a surface of the flat-shaped filler.

2. The multilayer ceramic capacitor according to claim 1, wherein the void provided in the surface of the flat-shaped filler is provided along at least a portion of an outer periphery of the flat-shaped filler.

3. The multilayer ceramic capacitor according to claim 1 or 2, wherein, in a cross section parallel to the height direction and the length direction of the multilayer body, the void is provided in a range of 5% or more and 90% or less of a perimeter length of the outer periphery of the flat-shaped filler.

4. The multilayer ceramic capacitor according to claim 1 or 2, wherein the flat-shaped filler extends in a direction substantially parallel to the length direction.

5. The multilayer ceramic capacitor according to claim 1 or 2, wherein the flat-shaped filler comprises a plurality of flat-shaped fillers which are provided in the electrically conductive resin layer, and when observed in a predetermined cross section of the electrically conductive resin layer, a ratio of the flat-shaped fillers, each having the void provided in a range of 5% or more and 90% or less of a perimeter length of the outer periphery of a corresponding one of the plurality of flat-shaped fillers relative to a total number of the plurality of flat-shaped fillers is 60% or more.

# FIG .1

# FIG .2

EP 4 648 077 A1

# FIG .3

# FIG .4

# FIG .5

## INTERNATIONAL SEARCH REPORT

| International application No. |
|---|
| **PCT/JP2024/005490** |

| | |
|---|---|
| **A. CLASSIFICATION OF SUBJECT MATTER** | |

*H01G 4/30*(2006.01)i
FI: H01G4/30 201G; H01G4/30 513; H01G4/30 516; H01G4/30 201F

According to International Patent Classification (IPC) or to both national classification and IPC

**B. FIELDS SEARCHED**

Minimum documentation searched (classification system followed by classification symbols)

H01G4/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-006501 A (TDK CORPORATION) 11 January 2018 (2018-01-11) paragraphs [0055]-[0058], [0073], fig. 2 | 1-4 |
| A | paragraphs [0055]-[0058], [0073], fig. 2 | 5 |
| A | JP 2013-179268 A (MURATA MFG. CO., LTD.) 09 September 2013 (2013-09-09) | 1-5 |
| A | JP 2021-028967 A (MURATA MFG. CO., LTD.) 25 February 2021 (2021-02-25) | 1-5 |
| A | JP 2021-125474 A (TAIYO YUDEN CO., LTD.) 30 August 2021 (2021-08-30) | 1-5 |
| A | JP 2014-039000 A (SAMSUNG ELECTRO-MECHANICS CO., LTD.) 27 February 2014 (2014-02-27) | 1-5 |
| A | US 2020/0185153 A1 (SAMSUNG ELECTRO-MECHANICS CO., LTD.) 11 June 2020 (2020-06-11) | 1-5 |
| A | US 2016/0254094 A1 (SAMSUNG ELECTRO-MECHANICS CO., LTD.) 01 September 2016 (2016-09-01) | 1-5 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 April 2024** | **07 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

EP 4 648 077 A1

## INTERNATIONAL SEARCH REPORT
### Information on patent family members

International application No.

**PCT/JP2024/005490**

| Patent document cited in search report | | | Publication date (day/month/year) | Patent family member(s) | | | Publication date (day/month/year) |
|---|---|---|---|---|---|---|---|
| JP | 2018-006501 | A | 11 January 2018 | (Family: none) | | | |
| JP | 2013-179268 | A | 09 September 2013 | US | 2013/0200749 | A1 | |
| | | | | CN | 103247439 | A | |
| | | | | KR | 10-2013-0090333 | A | |
| JP | 2021-028967 | A | 25 February 2021 | US | 2021/0050152 | A1 | |
| JP | 2021-125474 | A | 30 August 2021 | US | 2021/0241968 | A1 | |
| JP | 2014-039000 | A | 27 February 2014 | US | 2014/0043724 | A1 | |
| | | | | KR | 10-2014-0021416 | A | |
| US | 2020/0185153 | A1 | 11 June 2020 | KR | 10-2020-0071316 | A | |
| | | | | CN | 111312520 | A | |
| US | 2016/0254094 | A1 | 01 September 2016 | KR | 10-2016-0104333 | A | |
| | | | | CN | 105931839 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020088190 A